# EUROPEAN PATENT SPECIFICATION

(11) **EP 2 052 229 B1**
(45) Date of publication and mention of the grant of the patent: **15.08.2012**
(21) Application number: 07728301.8
(22) Date of filing: 19.04.2007
(51) Int. Cl.: G01N 1/22

(54) **SAMPLING DEVICE FOR VOLATILE SUBSTANCES**
PROBENAHMEVORRICHTUNG FÜR FLÜCHTIGE STOFFE
DISPOSITIF D'ÉCHANTILLONNAGE DE SUBSTANCES VOLATILES

(30) Priority: 01.08.2006 IT MI20061529; 01.08.2006 IT MI20061530
(43) Date of publication of application: 29.04.2009
(73) Proprietor: Fondazione Salvatore Maugeri Clinica del Lavoro E della Riabilitazione I.R.C.C.S., 27100 Pavia (IT)
(72) Inventor: COTTICA, Danilo, I-26100 Cremona (IT)
(74) Representative: Cinquantini, Bruno
(86) International application number: PCT/EP2007/053841
(87) International publication number: WO 2008/015029

(56) References cited:
- EP-A2- 0 714 020
- US-A- 5 116 577
- US-A1- 2003 215 958

## Description

### Field of the invention

The present invention relates to a sampling device of volatile substances dispersed in air by radial symmetry diffusion, used specifically for monitoring the pollution in working and living environments.

### State of the art

Sampling of volatile substances may be currently carried out with low investment -and management costs, and entirely without energy consumption, by resorting to diffusion sampling devices or samplers instead of the conventional systems based on the use of suction pumps powered by battery or by the electrical mains. Diffusion samplers comprise axial symmetry devices and radial symmetry devices. The latter are most advantageous due to their high sampling flow rate.

A first example of a radial symmetry device is described in EP0714020.

Disadvantageously, however, such diffusion samplers can not prevent, or at least considerably reduce, the adsorption of some substances, such as for example steam, -potentially interfering with the detection of the volatile substances to be analysed.

Indeed, while the atmospheric concentration of steam is normally in the order of some grams per cubic metre of air, the volatile substances which contribute to the air pollution may be present in concentrations from three to six lower orders of magnitude, thus in the order of some milligrams or micrograms per cubic metre of air.

According to the volatile substances to be determined and the adsorbing medium used in the sampler, an interference of this proportion, characterised by a concentration ratio from 1,000 to 1,000,000 times, could make retrieval and analysis of the collected substances very difficult or even make sampling impossible. This occurs, for example, if molecular sieves are used as adsorbing media, in which case the competition of steam rapidly saturates the adsorbing medium preventing the collection of the sought volatile substances.

A second example of a radial symmetry device is described in US5116577. Such device comprises an external cylindrical casing and an internal cylindrical casing which extends coaxially to the external one. The two casings define an intermediate space filled with a conversion reactant so as to convert the substance to be monitored into a conversion product. The internal casing contains an adsorbing material suitable to collect the conversion product. Disadvantageously, however, in order to extract the internal casing and subsequently analyse the adsorbed sample, the intermediate space must first be emptied and the remaining solid conversion reactant must be collected in a suitable container. This implies a higher complexity in extracting the internal casing and a considerable waste of time.

Furthermore, also this device cannot either prevent or at least considerably reduce the adsorption of some substances potentially interfering with the detection of the volatile substances to be analysed. An example of these interfering substances is ozone which, in high concentrations, negatively interferes on the sampling of aldehydes.

The need to make a diffusion sampling device having radial symmetry capable of overcoming the aforesaid drawbacks is therefore felt.

### Summary of the invention

It is the main object of the present invention to make a sampling device for volatile polluting substances by means of radial symmetry diffusion which, in addition to allowing high sampling flow rates, allows to either prevent or considerably reduce the adsorption of some substances, such as for example steam or ozone, potentially interfering with the detection of said-polluting substances.

A further object of the sampling device of the invention is to allow a rapid and simple extraction of the adsorbing cartridge from the device.

The present invention therefore proposes to obtain the aforementioned objects by making a sampling device for volatile polluting substances by radial symmetry diffusion which has the features of the claim 1.

Advantageously the device of the invention provides means for decreasing the amount of potentially interfering adsorbed substances, said means comprising an external permeation membrane of a suitable material,

Sampling is performed in two steps: the volatile substance molecules are diffused from the air of the contaminated external environment to the internal space of the sampling device, permeating through a stainless steel or other metallic material tubular membrane possibly coated with a suitable material, such as for example an hydrophobic material, and being diffused through a tubular membrane of porous material; they are finally collected by the adsorbing material arranged inside a cartridge coaxial and internal to said membranes.

The diffusion sampler, object of the present invention, has the following advantages.

The radial symmetry of the diffusion determines, despite the small dimensions of the sampler, a high value of the parameter S/L, that is the ratio between the diffusion surface and the diffusion path length, and thus a sampling flow rate of the same order of magnitude as that obtainable in "active" sampling which provides the use of suction pumps.

The high sampling flow rate, directly proportional to the parameter S/L, compensates the opposite effect determined by the resistance to diffusion offered by the external permeable membrane, thus allowing the determination of the atmospheric pollutants at low concentrations, e.g. 0,1 milligrams per cubic metre of air for four hour exposures.

The possibility of inserting adsorbing cartridges of different diameter inside the sampling device allows to use the techniques based on thermal desorption in addition to chemical desorption; the dimensional compatibility with the most common thermal desorbers allows to directly transfer the thermal desorption cartridges into the desorber, thus reducing handling to the minimum and consequently also the possible risks of accidental contamination of the samples. The possibility of filling adsorbing cartridges with different materials allows to make the sampler suitable to determine various categories of volatile substances.

The dependent claims describe preferred embodiments of the invention.

### Brief description of the figures

Further features and advantages of the invention will be better apparent in the light of the detailed description of preferred, but not exclusive, embodiments of a sampling device for volatile substances illustrated by way of non-limitative example, with reference to the accompanying drawings, in which:
Fig. 1 represents a longitudinal section of part of a first embodiment of the device according to the invention and lateral views of its ends;
Fig..2 represents a lateral view of a component of the first embodiment of the device of the invention;
Fig. 3 represents a lateral view of a further component of the first embodiment of the device of the invention;
Fig. 4 represents a longitudinal section of the first embodiment of the complete device fixed to the component of Fig. 3;

### Detailed description of preferred embodiments of the invention

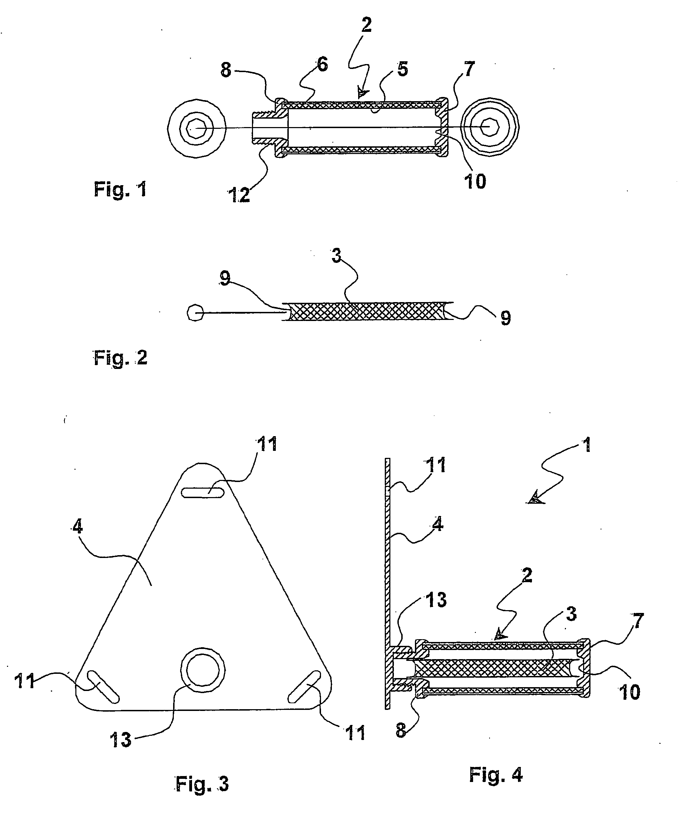

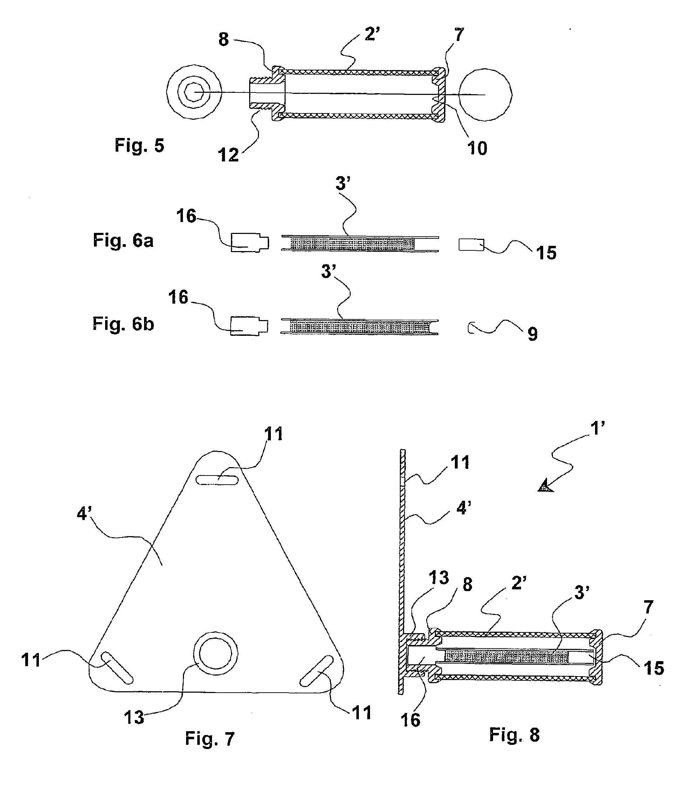

With reference to the figures 1 to 4, a first embodiment of a radial symmetry diffusion sampling device, or simply sampler, for volatile substances is represented, indicated as a whole by reference numeral 1, comprising:
- a first tubular body or barrier 2 of permeation and/or diffusion, preferably of cylindrical shape, reusable for repeated samplings;
- a second tubular body or barrier comprising an adsorbing cartridge 3, also preferably of cylindrical shape, containing a suitable adsorbing material;
- a supporting plate 4.

In this description the term permeation of volatile substances means penetration and diffusion of said substances.

Tubular body 2, shown in Fig. 1, for the permeation of the volatile substances to be analysed, coming from the external environment, comprises a first porous material membrane 5 and a second permeable membrane 6, arranged coaxially and externally to first membrane 5 and suitably coated with a material adapted to reduce the permeation of substances potentially interfering with the detection of the sought volatile substances.

Specifically, since the steam present in the air is an extremely interfering substance, this first preferred embodiment of the invention -provides that second membrane 6 is formed by a stainless steel or other metallic material net tube, previously externally coated with a hydrophobic material, preferably a silicon resin or Teflon or, more generically, perfluoro organic polymer in shape of film.

Within second membrane 6, first membrane 5 is formed by a porous tube of porous polyethylene or porous polyolefin or any other material which gives high strength and chemical inertia.

Both tube-shaped membranes 5, 6 are solidarily closed at the ends by means of a closed bottom 7 and a through head 8, preferably formed by polyethylene or other polymeric material, either fixed or welded to the two tubes so as to form a single hollow cylindrical body.

Advantageously, the polyolefin tube of membrane 5 has diameter suitably designed to be inserted, in concentric and coaxial manner, inside the stainless steel tube of membrane 6, conferring to the whole features of strength that allow use and handling without the risk of deformation.

Adsorbing cartridge 3, positionable concentrically inside tubular body 2, contains an adsorbing material suitable for adsorbing the volatile substances which are penetrated and diffused through membranes 5, 6.

In a variant of this first preferred embodiment of the invention, adsorbing cartridge 3 is an electrowelded or mechanically soldered net tube of stainless steel or other metallic material, as that shown in Fig. 2, filled with an adsorbing material, powdered or liquid at high viscosity, and closed at the two ends by two cups 9, also these in stainless steel or other metallic material. The stainless steel net meshes may be variable according to the grain size of the adsorbing material. In a second variant adsorbing cartridge 3 is a tube of porous polymer, preferably polyethylene.

Alternatively adsorbing cartridge 3 can be closed at one end by a stainless steel cup or a fluid-tight cap of plastic material and at the other end by a cylindrical fitting-in cap, again made of plastic material.

Cartridge 3 is inserted in tubular permeation body 2 and maintained in position between a lead-in 10 arranged on the closed base or bottom 7 and the free space of through head 8 or the fitting-in cap housed in said through head. The length of the cartridge is substantially equal to that of tubular permeation body 2 but the diameter is smaller with respect to said body, said cartridge being arranged in coaxial and concentric manner inside it.

Advantageously, adsorbing cartridges 3 may have suitable diameter and length to be directly inserted, without transfer of the adsorbing material, into the thermal desorbers available on the market, provided for example with desorbing tubes of external diameter ¼", i.e. 0,635 mm. Thermal desorption allows to obtain higher and constant recovery efficiency and to eliminate the use of toxic reactants.

In the case of chemical desorption, the adsorbing material is retrieved after sampling so to analyse the substances to be determined by means of suitable chemical reactants.

In the case of chemical desorption, the adsorbing cartridge is a disposable cartridge, while it is fully reusable in thermal desorption.

Advantageously, the powdered adsorbing material may be of any nature and composition with a minimum grain size either equal to or lower than 0,05 mm. Examples of adsorbing material are silica gel, activated carbon, graphitized carbons, molecular sieves.

The adsorbing material is retrieved after sampling so to analyse the substances to be determined by means of suitable chemical reactants.

The "equivalent pumping" capacity of the sampler of the invention is approximately 30-100 cm3/min of air, its total weight is equal to approximately 20-30 g, and its limit of analytic sensitivity is in the order of 1 part per billion (ppb) for a seven-day exposure.

The constructive material of the sampler, including diffusive surfaces, is preferably high-thickness polyethylene or any other material capable of conferring high strength and chemical inertia.

For both preferred embodiments the assembly of the sampler of the invention is completed by fixing the first body 2, containing the second body or adsorbing cartridge 3, to the supporting plate 4, preferably produced in polycarbonate or polyethylene, in the manner shown for example in Fig. 4. In this case, through head 8 is provided with an external threading 12 for fixing the sampler to the corresponding threaded seat 13 provided on supporting plate 4. In an alternative embodiment, the fixing between sampler of the invention and plate may simply be of fitting-in type with plate 4, acting as cap.

Supporting plate 4, is preferably but not necessarily triangular in shape, as shown in Fig. 3. Such plate 4, provided with one or more housings for clips 11, preferably three in number, allows to apply the sampler to people's clothes or to fix it to a suitable support provided in the various environments.

## Claims

1. A sampling device for volatile polluting substances by radial symmetry diffusion comprising
- at least one first hollow diffusion or permeation body (2) for the diffusion or permeation of said volatile substances from an external environment to inside said first body,
- a second hollow diffusion body (3), placed inside said at least one first body (2), containing an adsorbing material adapted to adsorb said volatile substances, wherein said first body (2) comprises a first membrane (5) of porous material and is provided with means for decreasing the amount of substances interfering with the detection of the volatile polluting substances,
**characterised in that** said means for decreasing the amount of interfering substances comprise a second permeable membrane (6), arranged coaxially and externally to the first membrane (5) and coated with a predetermined material adapted to reduce the permeation of substances interfering with the detection of the volatile polluting substances.

2. A device according to claim 1, wherein said predetermined material is a hydrophobic material.

3. A device according to claim 2, wherein said hydrophobic material is silicon resin in shape of film or teflon or perfluoro organic polymer in shape of film.

4. A device according to claims 1 to 3, wherein the second membrane (6) is formed by a metallic material net tube.

5. A device according to claim 4, wherein the first membrane (5) is formed by a porous tube in porous polyethylene or polyolefin.

6. A device according to claim 5, wherein said first and second membrane (5, 6) are solidarily closed at the ends by means of a closed bottom (7) and a through head (8).

7. A device according to any of the preceding claims, wherein said second hollow body comprises an adsorbing cartridge (3) formed by an electrowelded or mechanically soldered metallic material net tube, or formed by a tube of porous polymer.

8. A device according to claim 7, wherein said second body (3) is closed at the two ends by two metallic material cups (9), or is closed at a first end by a fitting-in cap (16), adapted to be housed in the through head (8) and to allow the handling of the second body without any direct contact with the same, and at a second end by a metallic material cup (9) or by a cylindrical cap (15).

9. A device according to claim 8, wherein the second body (3) is adapted to be inserted in the first body (2) through the through head (8) and held in position between a lead-in (10), provided in the closed bottom (7), and the fitting-in cap (16) or the free space of the through head (8).

10. A device according to any of the preceding claims, wherein there is provided a supporting plate (4) adapted for a fixing of the device and provided with one or more housings (11) for clips so as to apply said device to people's clothes or to a suitable support provided in the various environments.

## Patentansprüche

1. Abtastvorrichtung für flüchtige verschmutzende Substanzen durch radial symmetrische Diffusion, umfassend:
zumindest einen ersten hohlen Diffusions- oder Permeationskörper (2) für die Diffusion oder Permeation der flüchtigen Substanzen von einer Außenumgebung in das Innere des ersten Körpers,
- einen zweiten hohlen Diffusionskörper (3), der in dem zumindest einen ersten Körper (2) angeordnet ist und ein adsorbierendes Material enthält, das derart ausgelegt ist, die flüchtigen Substanzen zu adsorbieren, wobei der erste Körper (2) eine erste Membran (5) aus porösem Material umfasst und mit einem Mittel zur Verringerung der Menge von Substanzen versehen ist, die die Detektion der flüchtigen verschmutzenden Substanzen stören, **dadurch gekennzeichnet, dass** das Mittel zur Verringerung der Menge von störenden Substanzen eine zweite permeable Membran (6) umfasst, die koaxial und außerhalb der ersten Membran (5) angeordnet und mit einem vorbestimmten Material beschichtet ist, das derart angepasst ist, die Permeation von Substanzen zu reduzieren, die die Detektion der flüchtigen verschmutzenden Substanzen stören.

2. Vorrichtung nach Anspruch 1,
wobei das vorbestimmte Material ein hydrophobes Material ist.

3. Vorrichtung nach Anspruch 2,
wobei das hydrophobe Material Silikonharz in Filmform oder Teflon oder ein organisches Perfluorpolymer in Filmform ist.

4. Vorrichtung nach einem der Ansprüche 1 bis 3,
wobei die zweite Membran (6) durch ein Netzrohr aus Metallwerkstoff geformt ist.

5. Vorrichtung nach Anspruch 4,
wobei die erste Membran (5) durch ein poröses Rohr in porösem Polyethylen oder Polyolefin geformt ist.

6. Vorrichtung nach Anspruch 5,
wobei die erste und zweite Membran (5, 6) an den Enden mittels eines geschlossenen Bodens (7) und eines Durchgangskopfes (8) gemeinsam geschlossen sind.

7. Vorrichtung nach einem der vorhergehenden Ansprüche,
wobei der zweite hohle Körper eine adsorbierende Kartusche (3) umfasst, die durch ein elektroverschweißtes oder mechanisch verlötetes Netzrohr aus Metallwerkstoff geformt oder durch ein Rohr aus porösem Polymer geformt ist.

8. Vorrichtung nach Anspruch 7,
wobei der zweite Körper (3) an den beiden Enden durch zwei Metallwerkstoffschalen (9) geschlossen ist oder an einem ersten Ende durch eine Passkappe (16) geschlossen ist, die zur Aufnahme in dem Durchgangskopf (8) angepasst ist und die Handhabung des zweiten Körpers ohne direkten Kontakt mit diesem zulässt, und an einem zweiten Ende durch eine Metallwerkstoffschale (9) oder durch eine zylindrische Kappe (15) geschlossen ist.

9. Vorrichtung nach Anspruch 8,
wobei der zweite Körper (3) zum Einsetzen in den ersten Körper (2) durch den Durchgangskopf (8) angepasst ist und zwischen einer Einführung (10), die in dem geschlossenen Boden (7) vorgesehen ist, und der Passkappe (16) oder dem freien Raum des Durchgangskopfes (8) an der Stelle gehalten ist.

10. Vorrichtung nach einem der vorhergehenden Ansprüche,
wobei eine Trägerplatte (4) vorgesehen ist, die zur Befestigung der Vorrichtung angepasst und mit einem oder mehreren Gehäusen (11) für Klemmen versehen ist, um so die Vorrichtung an Kleidung von Leuten oder an einem geeigneten Träger, der in verschiedenen Umgebungen bereitgestellt ist, anzubringen.

## Revendications

1. Dispositif d'échantillonnage de substances polluantes volatiles par diffusion symétrique radiale, comprenant :
- au moins un premier corps de diffusion ou de perméation creux (2) pour la diffusion ou la perméation desdites substances volatiles depuis un environnement extérieur vers l'intérieur dudit premier corps,
- un second corps de diffusion creux (3), placé à l'intérieur dudit au moins un premier corps (2), contenant un matériau adsorbant destiné à adsorber lesdites substances volatiles,
dans lequel ledit premier corps (2) comprend une première membrane (5) d'un matériau poreux et est doté de moyens pour réduire la quantité de substances interférant avec la détection des substances polluantes volatiles,
**caractérisé en ce que** lesdits moyens pour réduire la quantité de substances interférentes comprennent une seconde membrane perméable (6), disposée de façon coaxiale et à l'extérieur de la première membrane (5) et revêtue d'un matériau prédéterminé destiné à réduire la perméation des substances interférant avec la détection des substances polluantes volatiles.

2. Dispositif selon la revendication 1, dans lequel ledit matériau prédéterminé est un matériau hydrophobe.

3. Dispositif selon la revendication 2, dans lequel ledit matériau hydrophobe est une résine de silicium sous forme d'un film ou de téflon ou un polymère organique perfluoré sous forme d'un film.

4. Dispositif selon les revendications 1 à 3, dans lequel la seconde membrane (6) est formée par un tuyau de type grillage en matériau métallique.

5. Dispositif selon la revendication 4, dans lequel la première membrane (5) est formée par un tuyau poreux en polyéthylène poreux ou en polyoléfine poreuse.

6. Dispositif selon la revendication 5, dans lequel lesdites première et seconde membranes (5, 6) sont fermées de façon solidaire aux extrémités au moyen d'un fond fermé (7) et d'une tête de passage (8).

7. Dispositif selon l'une quelconque des revendications précédentes, dans lequel ledit second corps creux comprend une cartouche adsorbante (3) formée par un tuyau de type grillage en matériau métallique électrosoudé ou soudé mécaniquement, ou formée par un tuyau d'un polymère poreux.

8. Dispositif selon la revendication 7, dans lequel ledit second corps (3) est fermé aux deux extrémités par deux coupelles en matériau métallique (9), ou est fermé à une première extrémité par un bouchon d'emboîtement (16) destiné à être logé dans la tête de passage (8) et à permettre la manipulation du second corps sans aucun contact direct avec ce dernier, et à une seconde extrémité par une coupelle en matériau métallique (9) ou par un bouchon cylindrique (15).

9. Dispositif selon la revendication 8, dans lequel le second corps (3) est destiné à être inséré dans le premier corps (2) par la tête de passage (8) et à être maintenu en place entre un orifice d'entrée (10), fournie dans le fond fermé (7), et le bouchon d'emboîtement (16) ou l'espace libre de la tête de passage (8).

10. Dispositif selon l'une quelconque des revendications précédentes, dans lequel il est fourni une plaque de support (4) destinée à fixer le dispositif et pourvue d'un ou de plusieurs logements (11) pour des pinces de façon à appliquer ledit dispositif sur les vêtements de personnes ou sur un support convenable fourni dans les divers environnements.
